# EUROPEAN PATENT APPLICATION

(11) **EP 3 736 439 A1**
(43) Date of publication of application: **11.11.2020**
(21) Application number: 19173527.3
(22) Date of filing: 09.05.2019
(51) Int. Cl.: F03D 3/06, F03D 3/00, F03D 3/02

(54) **EDGE PROTECTORS**

(71) Applicant: Ohlmann, Hans-Armin, Kitchener, Ontario N2H 6P2 (CA)
(72) Inventor: Ohlmann, Hans-Armin, Kitchener, Ontario N2H 6P2 (CA)
(74) Representative: Ruschke, Hans Edvard

(57) **Abstract**

A vertical axis wind turbine, comprising two counter-rotating rotors (11) mounted on first and second spaced apart vertical axes, each said rotor (11) having a plurality of rotor blades (15), wherein the shape of the edge protector (1) fits to the shape of each rotor blade (15) and a second end (b) of the edge protector (1) is thicker than the first end (A) of the edge protector (1) and the edge protector (15) is made of plastic. The invention results in improvements like shortening the production time and thus reducing costs of the existing concept and improving the aerodynamic efficiency by a valuable degree and increasing the swept area as a bonus and finally improving the protection of birds and bats.

## Description

### (APPLICATION FOR A EUROPEAN PATENT)

This invention relates to the prior art as described in CA 2,546,750 C or in US Patent 6,942,454 B2 ***"Vertical Axis Wind Turbine".*** For eons, wind power has been a source of energy and has been harnessed in various fashions. A profound distinction can be made between horizontal axis wind turbines (HAWTs) and vertical axis wind turbines (VAWTs).

In modern times, the prevalent concept is the HAWT, most frequently with three airfoil blades. While this type of wind turbine claims the highest efficiency, they are burdened with some substantial. disadvantages:
a. They are mono-directional, which means they have to be turned into the wind.
b. Their minimum operational wind speed (cut-in speed) is relatively high and the maximum wind speed (cut-out speed) they can endure is relatively low, allowing for only a relatively narrow window of operation, beyond which they are prone to damage and have to stop operating.
c. Their serviceable components sit high up in the so-called nacelle, on top of a tall pillar, which is inconvenient for service and parts replacements.
d. Although they are considered "fast-runners" by the yardstick of their lift factor, their actual slewing speed is relatively low (typically in the range of 15 to 30 RPM), which necessitates expensive multi-stage gearboxes, which impacts negatively on the overall system efficiency and costs.
e. Many people consider HAWTs to have an ugly appearance and to be an insult to the landscape.
f. By their design, HAWTs do not lend themselves to do-it-yourself construction and actually grow attractive with size.

Nowadays commercial applications are but all exclusively covered by HAWTs. However, VAWTs avoid most of the above disadvantages, in that:
a. They are omni-directional.
b. The useful cut-in wind speed is lower and the cutout speed is higher, thus making the window of operation wider. By using the inventive concept of the edge protector wind speeds of up to 90 km/h can be used or even more.
c. Their serviceable components can be concentrated at their bottom end and for easy accessibility.
d. Also considered "low runners" by their low lift factor, they actually slew faster, allowing for smaller-ratio gearboxes, which are less expensive and more efficient.
e. They allow for more flexible, pleasing designs.
f. They allow for operation at higher wind speeds (storms) with lower risk of getting damaged, see also point b.
g. They lend themselves to simple design and construction.

The main disadvantage of omni-directional VAWTs is their substantially lower efficiency; the latter defined as the ratio between the latent energy in the wind and the actual power output. Improvements of the VWATs, which forms this invention pertains to the turbine concept as described therein, namely by attaching EDGE PROTECTORS to the rotor blades of said concept.

The invention results in improvements listed as follows:
1. Shorten the production time and thus costs of the existing concept.
2. Improve the aerodynamic efficiency by a valuable degree.
3. Increase the swept area as a bonus.
4. Improve the protection of birds and bats.

This Edge Protector is to be produced by continuous extrusion and cut to length as to fit the length of the rotor blades.

The cross section of the edge protector will look very similar to an airplane wing or an air foil.

The most suitable plastic material should be polyurethane with optimized softness and flexibility; very likely a compromise for accommodating somewhat competing demands between points 2. 3. and 4. of the above list of improvements.

The methods of choice for attaching and fastening the edge protector to the blades will be gluing or riveting, with the latter preferable with regard to easy replacement. Alternatively screws with flat screw heads are a reliable choice to fix the edge protector 1 to the rotor blade.

### SUMMARY OF THE INVENTION

It is an object of the invention to provide an improvement of vertical axis wind turbine (VAWT) with excellent efficiency, while maintaining most of the above-mentioned advantages of VAWTs.

In the invention, the VAWT has two counter-rotating rotors mounted on first and second spaced apart vertical axes. Each rotor has a plurality of rotor blades extending generally inwardly from an outer circumference, the vertical axes being mounted on a support structure which is in turn rotatable on a third vertical axis on a platform. The third axis is spaced from a point midway between the first and second axes in a direction at 90 degrees to and forward from a line between the first and second axes. The VAWT further has a guide vane mounted on the support structure, having a vertex forward of the third vertical axis in the direction at 90 degrees from a line between the first and second axes. The guide vane has left and right symmetrical vane portions extending towards the rotors so as to direct airflow from wind primarily towards portions of the rotors outboard of the first and second axes. The guide vane also tends to keep the VAWT oriented with the guide vane's axis of symmetry pointing forwardly into the wind.

A further improvement is achieved by an edge protector, wherein a first end (A) of an edge protector (1) encompasses at least a part of each body of the rotor blade (15), wherein the shape of the edge protector (1) fits to the shape of each rotor blade (15) and a second end (b) of the edge protector (1) is thicker than the first end (A) of the edge protector (1) and the edge protector (15)
is made of plastic.

Further features of the invention will be described or will become apparent in the course of the following detailed description.

### BRIEF DESCRIPTION OF THE DRAWINGS

The invention will now be described in detail, with reference to the accompanying drawings of a preferred embodiment. In the drawings:
FIG. 1 shows a cross section or top view of the Edge Protector {1} attached to one rotor blade 15. The figure is not to scale for the sake of better clarity.
Fig.2 is a top view of an exemplary embodiment of the vertical axis wind turbine (VAWT), showing also the edge protector 1 attached to the blades.
Fig.3 is a perspective view of the exemplary embodiment, showing the edge protector attached to the rotor blades.

### Detailed Description

The object of the invention is to improve on the overall quality of the known "Vertical Axis Wind Turbine" according to the above two patents on four accounts:
1. Shorten the production time and costs of said wind turbine.
2. Improve the aerodynamic efficiency by a measurable degree.
3. Increase the swept area without having to change any other substantial parameter.
4. Improve on the protection of Birds and bats.

### As to above point 1.:

The leading edges of the blades, in the referenced patent there are six blades per rotor, running over the whole length of those rotors, feature sharp edges due to the production process. These edges have to be deburred, or even better, rounded by grinding. This is either a very labour intensive and cumbersome procedure or, halve way automated, would demand expensive investment in machinery.

The Edge Protector according to this invention will eliminate the necessity of grinding the blade edges.

### As to above point 2.:

Sharp leading edges on the blades cause micro turbulences which substantially decrease the aerodynamic efficiency of said turbine concept. So far, to decrease this negative effect, the blade edges have to be ground for deburring, or even better, rounding, which is labour intensive and cumbersome. An investment in a semi - automated grinding process has not been considered because of the high costs.

The Edge Protector according to this invention eliminates the necessity of grinding the edges.

### As to above point 3.:

The power output of a wind turbine calculates as product of wind speed (to the power of 3) times the swept area. Thus, increasing the swept area without altering any other substantial parameter of the wind turbine related to this invention is very desirable.

The Edge Protector according to this invention provides for this extra bonus.

### As to above point 4.:

The casualties amongst birds and bats caused by the now prevailing horizontal axis wind turbines with three blades are well known and documented. Although the subject Vertical Axis Wind Turbine presents a solid object in the landscape into which to fly a bird must be blind, to decrease the damage done to a flying animal upon impact is very desirable, and would certainly qualify the resistance of wild life activists against wind turbines. So, the Edge Protector has to be as soft as possible while not compromising other technical requirements, i.e. the mechanical strength necessary to withstand the stress exerted on the Edge Protector by the impact of the wind force.

The Edge Protector according to this invention would substantially contribute to the acceptance of the subject wind turbine.

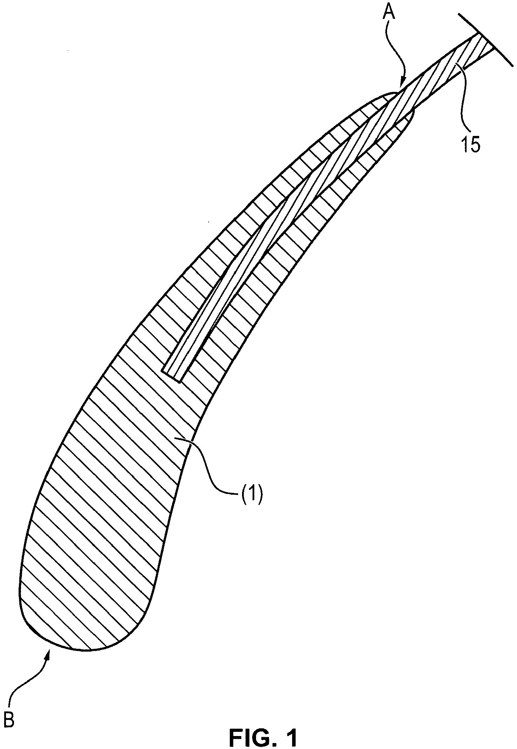

Thus, FIG. 1 shows a cross section or top view of the Edge Protector 1 attached to one rotor blade 15. The figure is not to scale for the sake of better clarity.

A first end (A) of an edge protector 1 encompasses at least a part of a rotor blade 15 of a vertical axis wind turbine (VAWT), whereby in particular at least 60%, 70%, 80%, 90% or up to 100 % of each of the rotor blades 15 of a vertical axis wind turbine (VAWT) are covered by the first end A of the edge protector 1. The thickness of the edge protector 1 increases from the first end A towards a second end B of the edge protector 1. Between those two ends A, B the edge protector 1 can have for example an airfoil shaped form or in particular a drop shaped form. In all forms usable for the edge protector 1 the thickness of the plastic material of the edge protector 1 increases from the first end A to the second end B and is solidly encompassing the rotor blades 15. After the end of the rotor blade 15 the edge protector 1 is also of solid plastic material. The edge protector 15 could also have any other shape which provides enough integrally stability against the wind forces grabbing against the edge protector and the rotor blade 15 of the vertical axis wind turbine. By the edge protector 1, no matter which form, the swept area of the vertical axis wind turbine is significantly increased, additionally the production costs for the rotor blades 15 are decreased by using plastic material and the aerodynamic efficiency of said wind turbines are significantly increased.

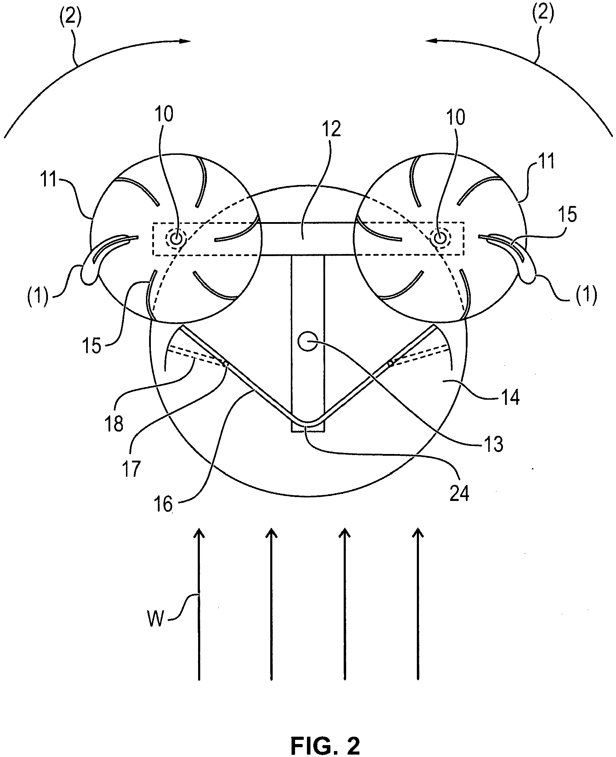

FIG. 2 shows a top view of a vertical axis wind turbine (VAWT) with two rotors 11 on a T-shaped support structure 12. Each rotor is mounted on a rotor axis 10. The support structure is rotatable around a center axis 13 on a support platform 14, which in turn will sit on a cylindrical foundation or tower (not shown) of a height determined by topographical parameters. Preferably, the rotors feature six blades 15 each, though that number could vary if desired. One vertical, curved guide vane 16 mounted on the support structure sits centered in front of the two rotors 11. Preferably, two vertical hinges 17 render the two straight ends of the guide vane 16 into deflector flaps 18. FIG. 2 also shows the vertical axis wind turbine (VAWT) with only one Edge Protector (i) attached to one blade 15 of each rotor 11. This FIG. 2 shows also, that the deflector flaps 18 will have to be shortened in order to create the greater daylight for the Edge Protectors 1 to clear said deflector flaps only on the right rotor 11. This is one substantial modification to said turbine, motivated by the invention namely the edge protector.

Also, FIG. 2 shows that the swept area will be larger by the Edge Protectors' 1 extension beyond the rotor radius without the necessity to change any other substantial parameter of the turbine according Canadian Patent 2,546,750 or US Patent 6,942,454.

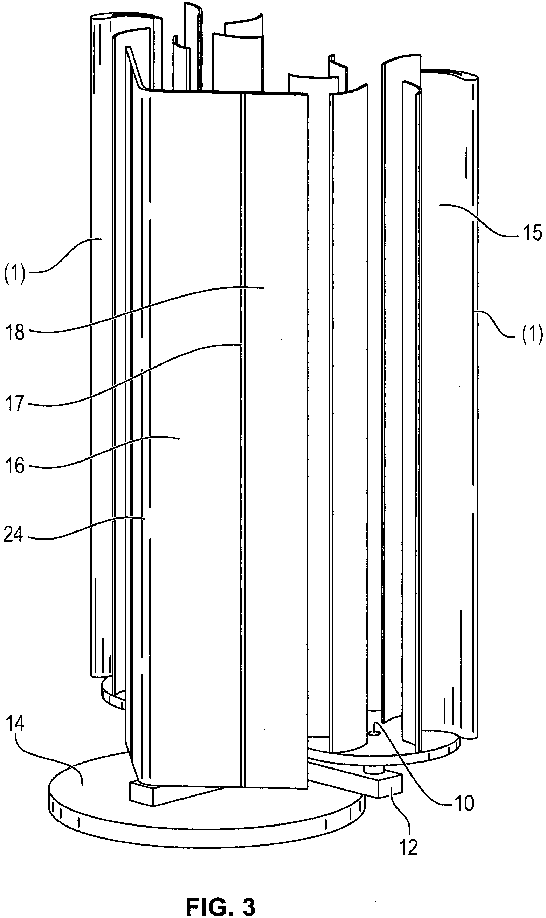

FIGS. 3 is a perspective view. All FIGS. 1-3 are schematic, in that no upper support structure is illustrated, for greater clarity. However, in practice there would be an upper support structure similar to the support structure 12, to provide sufficient support for the rotor axes and guide vane. In the twin rotor arrangement of the invention, there are two counter-rotating rotors 11 and the curved guide vane 16 in front of them. The guide vane keeps the assembly oriented as shown in FIG. 2, i.e. with the guide van always pointing into the wind, and shields both the returning blade sectors of the rotors. It also offers the opportunity to move the twin rotors apart, creating a larger swept area with no increase in rotor diameter. Of course, this possibility has its limits and the inventor's preliminary test results indicate that there may be an optimal distance between the rotor centers in the range of 1.5 to 2 rotor diameters. A distinct advantage, for the design and construction of the space between the twin rotors, is the possibility of building a support structure behind the guide vane, to stabilize it against the dynamic pressure created by airflow stalled at and divided by the vertex of the guide vane. Although the optimal form of the curved guide vane would look like the front half of a falling drop, the best angle of attack at the two vertical edges adjacent to the rotor blades' circular paths, is the decisive factor and ultimately dictates the preferred overall shape. For the sake of simple design, a circular shape, representing a segment of a cylinder, may turn out to be the best compromise. Another effective form would be just two straight blades joined by a vertical, rounded edge, in the front center of the structure, which is what is illustrated in FIG. 2. The support structure 12 on which the guide vane and rotors are mounted is rotatable around the center axis 13, which is located on a line perpendicular to a line joining the axis between the two rotor axes 10, halfway between them. Thus, the effect of the structure is that it is self-aligning with the airflow direction. Described in another way, the VAWT has two counter-rotating rotors 11 mounted on first and second spaced apart vertical axes 10. Each rotor has a plurality of rotor blades 15 extending generally inwardly from an outer circumference, the vertical axes being mounted on a support structure 14 which is in turn rotatable on a third vertical axis 13 on a platform (not illustrated). The third axis is spaced from a point midway between the first and second axes in a direction at 90 degrees to and forward from a line between the first and second axes. The VAWT further has a guide vane 16 mounted on the support structure, having a vertex 24 forward of the third vertical axis in the direction at 90 degrees from a line between the first and second axes. The guide vane has left and right symmetrical vane portions extending towards the rotors so as to direct airflow from wind primarily towards portions of the rotors outboard of the first and second axes. The guide vane also tends to keep the VAWT oriented with the guide vane's axis of symmetry pointing forwardly into the wind. The guide vane 16 may be provided with two vertical hinges 17, attaching two rotatable deflector flaps 18 to the guide vane. These two deflector flaps, controlled for example by a servo gear motor (not shown), will allow partial or total diversion of the airstream, thus facilitating the safe operation at higher than rated wind speeds.

Preferably, the rotor blades are curved in airfoil-like shapes relative to the airflow for enhanced efficiency relative to that of a straight blade. The blades may have curved outer portions which straighten out towards the center of the rotor. In the preferred embodiment, the rotors have six blades each.

Another feature of the preferred embodiment is the ratio between the chord length of the blades and the rotor diameter preferably being approximately one quarter. This is not essential, and may vary with the scale and other details of configuration, but appears to be optimum based on wind tunnel testing to date.

It is an advantage of the invention that its structure, particularly with the guide vane 16, permits the width of the swept area to be significantly larger than just the two rotor diameters.

A strong support structure between the rotors (not illustrated), with the vertical guide vane an integral part of it, lends itself to supporting on its top any useful feature, not necessarily related to power generation.

Finally, FIG. 3 shows a front view of the rotor assembly with one Edge Protector 1 attached to and running down the whole length of one blade 15.

### Preferred Method for the Production of the Edge Protector

The preferred production method is extrusion of any suitable plastic material i.e. PVC, ABS or Polyurethane. Suitable means the material has to have properties satisfying the prerequisites as stated in point 4 of the introduction of this description. Additionally, the chosen material must be weather proof, tolerating fluctuations in temperature, air humidity and ultraviolet radiation. And it has to withstand the mechanic stress exerted by the wind power on the blades. If the service life of the wind turbine is longer than that of the Edge Protector, riveting to the blades would be the method of choice for attaching the Edge Protectors to the blades.

The extrusion process is continuous and there are two ways of transporting the Edge Protector to the site of application: in quasi endless roll, not totally endless of course, rather rolled up to diameters allowed for by traffic regulations, for the purpose of whole sale without knowing the size if the wind turbine or the length of the rotor blades, whereby the Edge Protector can be cut to size by hack saw or power circular saw. For orders where the turbine sizes respectively, the blade lengths are known, the Edge Protector 1 can be cut to length automatically by means of parallel travelling and returning power circular saw length the out-feed lane of the extruder. The cut-off pieces can be automatically packaged in any preprogrammed numbers, shrink rapped or protected otherwise for transportation.

In the case of the construction of large wind farms it may be economical to have an extrusion plant put on a flatbed trailer stationed at the farm site for producing the Edge Protector right on the spot.

### Clarification

In the disclosure of the invention the term "leading edge" is used, which is defined as follows, FIG. 2 shows two circular arrows (2) which indicate the rotors' spinning directions: the left rotor spins clockwise, the right rotor spins counter clockwise. Looked at it without any other defining consideration, the leading edge would be the inside edge of the blade. But looking at the pertinent aerodynamics, the leading edge of the blade is the one ending on the circumference of the rotor, because the flowing air hits this outer edge first.

## Claims

1. A vertical axis wind turbine, comprising two counter-rotating rotors (11) mounted on first and second spaced apart vertical axes, each said rotor (11) having a plurality of rotor blades (15) extending generally inwardly from an outer circumference, said vertical axes being mounted on a support structure (12) which is in turn rotatable on a third vertical axis on a platform, said third axis being spaced from a point midway between said first and second axes in a direction at 90 degrees to and forward from a line between said first and second axes, said vertical axis wind turbine further comprising a guide vane (16) mounted on said support structure (12), having a vertex forward of said third vertical axis in said direction at 90 degrees from a line between said first and second axes, said guide vane having left and right symmetrical vane portions extending towards said rotors so as to direct airflow from wind primarily towards portions of said rotors outboard of said first and second axes, said guide vane also tending to keep said vertical axis wind turbine oriented with said guide vane's axis of symmetry pointing forwardly into the wind, further comprising movable deflector flaps (18) pivotally mounted adjacent opposite ends of said left and right vane portions for movement about a generally vertical axis, forwardly from a position where they are generally coplanar with said vane portions, for deflecting air at least partially away from said rotors
**characterized in that**
a first end (A) of an edge protector (1) encompasses at least a part of each body of the rotor blade (15), wherein the
shape of the edge protector (1) fits to the shape of each rotor blade (15) and a second end (b) of the edge protector (1) is thicker than the first end (A) of the edge protector (1) and the edge protector (15) is made of plastic.

2. A vertical axis wind turbine according to claim 1, wherein the edge protector (1) is cut to length as to fit the length of the rotor blades (15).

3. A vertical axis wind turbine according to claim 1, wherein the edge protector (1) has a shape similar to an airplane wing or an air foil.

4. A vertical axis wind turbine according to any preceding claim, wherein the edge protector (1) is made of polyurethane, PVC or ABS with optimized softness and flexibility, produced by continuous plastic extrusion.
